# EUROPEAN PATENT SPECIFICATION

(11) **EP 1 348 717 B1**
(45) Date of publication and mention of the grant of the patent: **16.07.2008**
(21) Application number: 03015023.9
(22) Date of filing: 15.04.1998
(51) Int. Cl.: C08F 8/00, C02F 1/56, C08F 8/12

(54) **Method for producing a high molecular flocculant**
Verfahren zur Herstellung eines hochmolekularen Flockungsmittels
Procédé de fabrication d'un floculant a poids moléculaire élevé

(30) Priority: 16.04.1997 JP 9858497; 22.04.1997 JP 10406997
(43) Date of publication of application: 01.10.2003
(62) Divisional of application: 98106804.2
(73) Proprietor: Sony Corporation, Tokyo (JP)
(72) Inventor: Inagaki, Yasuhito, c/o Sony Corporation, Tokyo (JP); Watanabe, Haruo, c/o Sony Corporation, Tokyo (JP); Noguchi, Tsutomu, c/o Sony Corporation, Tokyo (JP)
(74) Representative: Müller - Hoffmann & Partner

(56) References cited:
- EP-A- 0 067 362
- EP-A- 0 135 727
- EP-A- 0 528 409
- WO-A-91/18026
- US-A- 2 579 451
- US-A- 2 721 113
- US-A- 3 345 344
- US-A- 3 864 312
- US-A- 3 864 323

## Description

### BACKGROUND OF THE INVENTION

This invention relates to a method for producing a high-molecular flocculant rendered water-soluble by conversion of cyano groups contained in a high-molecular material.

### Description of the Related Art

In the field of processing waste water, a flocculant is used as a reagent for causing aggregation and precipitation of micro-sized particles dispersed in waste water. In the waste water, such as industrial waste water, it is a frequent occurrence that mud or high-molecular impurities are dispersed as colloidal particles. The flocculant serves for aggregating these colloidal particles for purifying the polluted water.

Of the wide variety of known flocculants, those having a molecular structure of a long chain and exhibiting high hydrophilicity are high-molecular flocculants which are used extensively because addition of only a limited amount thereof to the colloidal particles leads to significant aggregating effects. The high-molecular flocculants are classified into an anionic type, a cationic type and a nonionic type depending on static charges on dissolution in water. Since a majority of colloidal particles are charged to the positive or negative polarity, extremely large flocs are formed to lower the turbidity highly efficiently by properly selecting the high-molecular flocculants depending on the polarity of the static charges.

In the field of manufacturing industrial products, high-molecular material, containing acrylonitrile as a monomeric unit, are used extensively. Among the high-molecular materials containing acrylonitrile, there are polystyrene based resins, typified by nitrile resins, ABS (acrylonitrile- butadiene- styrene resins), SAN resins (styrene- acrylonitrile resin), AAS resins (acrylonitrile- acrylstyrene resins) and ACS resins (acrylonitrile- chlorinated polyethylene- styrene resin), acrylic fibers obtained on spinning a polymer having acrylonitrile as a main monomeric unit, and NBR (acrylonitrile- butadiene rubber, also termed nitrile rubber).

A resin molded product, containing acrylonitrile as monomeric units, is superior in stiffness, dimensional stability and workability and hence is used frequently as a cover or a casing for various usages, a casing for an electric appliance or a car or as a material for components.

The acrylic fibers are lightweight, bulky and is excellent in heat insulating properties, skin touch feeling, weatherability and resiliency, so that they are used extensively for apparel alone or as a mixture with other fibers, such as wool or cotton.

The nitrile rubber exhibits superior weatherability against oils, such as fuel oil, machine oil or a lube oil, so that it is used as a fuel hose, oil seal or a belt and in particular for car use.

The acrylonitrile containing high-molecular material, used in a wide variety of industrial products, produces a large quantity of waste materials in the course of fabrication of the industrial products or on discarding of the used-up industrial products. The waste high-molecular materials are generally disposed of by techniques such as incineration, earth filling or re-melting. The former two technique belongs to discarding, while the later technique belongs to recycling.

The above-mentioned disposal techniques for the high-molecular material suffer from specified problems.

First, the incineration is accompanied by the problem of evolution of toxic gases during combustion of the waste material. That is, highly toxic cyan gas (HCN) is evolved due to cyano groups (-C≡N) contained in the acrylonitrile monomer unit and which constitutes one of side chains of the polymer. Another factor contributing to incineration difficulties is susceptibility to conversion into incombustible matter as a result of carbonization.

Re-melting is a technique of heat-melting the recovered waste material for re-molding, and represents an effective technique insofar as thermoplastic resins are concerned. However, the material tends to be deteriorated in quality due to lowering in the molecular weight or oxidation, while being liable to mixing of foreign matter, such as dust and dirt. If waste materials of different originating points are processed collectively, technical and cost problems are raised, such as the necessity of re-coloring due to coexistence of various coloring agents.

Thus, discarding by land filling is nowadays thought to be most proper measures. However, selection and procurement of the proper site for a processing plant is becoming difficult from year to year, while the problem of environmental pollution cannot be evaded without difficulties.

US-A-3 864 312 describes a process for producing a water-soluble powdered cationic carbamoyl polymer, which comprises reacting a carbamoyl polymer with a formaldehyde and an amine or with an amine-formaldehyde adduct in a mixture of water and at least one organic solvent which is miscible with water and not capable of dissolving said carbamoyl polymer.

### SUMMARY OF THE INVENTION

It is an object of the present invention to provide a method for manufacturing a high-molecular flocculants having superior flocculating properties by a simple and safe manner using the high-molecular material containing cyano groups as a starting material.

The high-molecular flocculant produced according to the present invention, proposed for accomplishing the above object, is such a flocculant in which at least a portion of cyano groups (-C≡N) contained in the high-molecular material is converted into carbamoyl groups according to claim 1 to impart water-solubility to enable the use of the material as a flocculant.

The present invention provides a high-molecular flocculant in which at least a portion of cyano groups contained in a high-molecular material has been converted into carbamoyl groups.

The flocculant can be prepared by hydrolyzing the cyano group containing high-molecular material.

In particular, if a used-up waste material from some other process is used as a high-molecular material for use as a starting material, resources can be exploited effectively by recycling thus contributing to environment conservation.

The high-molecular flocculant, thus obtained, can be injected into water for processing for water processing as a cationic or nonionic type high-molecular flocculant. It may also be used in conjunction with other nonionic, anionic or cationic high-molecular flocculant.

It is seen from above that the high-molecular flocculant produced according to the present invention is obtained as a result of hydrophilicity-imparting modification of the high-molecular material containing cyano groups, in particular cyano groups originating from acrylonitrile. Since the high-molecular material is likely to be produced in large quantities as industrial wastes, the present invention is highly effective in reducing toxic waste materials and effective utilization of resources.

Moreover, since this modification of the high-molecular material is achieved by a hydrolytic reaction, there is caused no problem such as emission of toxic gases during incineration thus evading the problem of new environmental pollution in the course of processing of waste materials. In addition, the high-molecular flocculant obtained as a result of processing of the waste materials exhibits superior properties in connection with the rate of flocculation, turbidity of the supernatant liquid or in the water content of the cake. Therefore, use of the high-molecular flocculant obtained as a result of processing of the waste materials, for water processing, leads to re-utilization of the usually discarded waste materials, thus contributing not only to reduction of the toxic waste materials and effective utilization of resources, but to environmental conservation through purification of waste water.

### BRIEF DESCRIPTION OF THE DRAWINGS

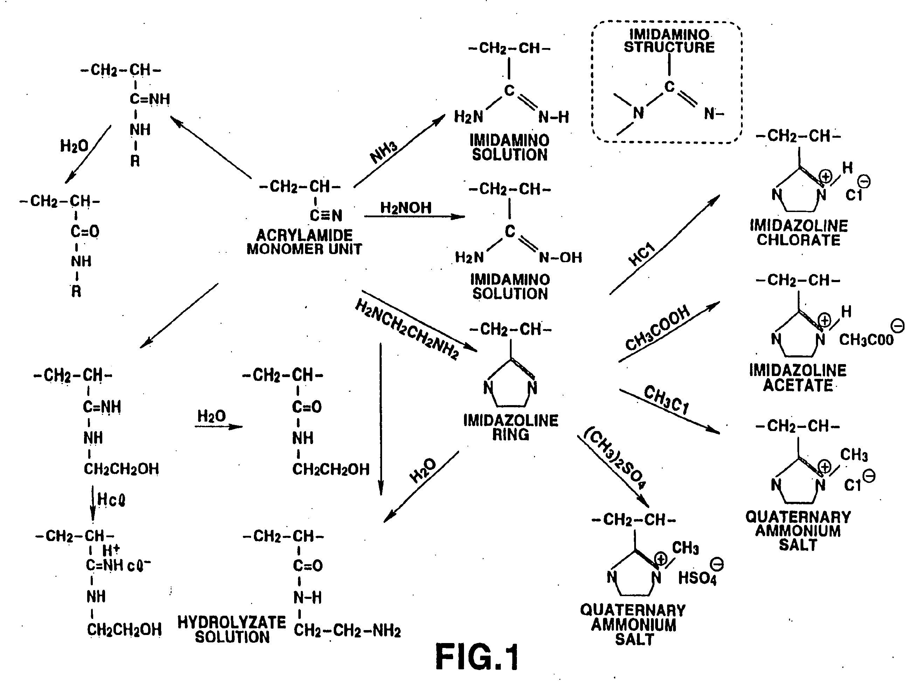

Fig.1 illustrates the mechanism for addition reaction, salt forming reaction and hydrolysis in connection with manufacture of a high-molecular flocculant of the present invention.

### DESCRIPTION OF PREFERRED EMBODIMENTS

The high-molecular flocculant produced according to the present invention is obtained by hydrolysis in case of necessity for adjusting water-solubility or flocculating properties. If it is desired to impart sufficient hydrophilicity to the yielded high-molecular flocculant or to preclude yielding of hydrogen cyanide with a view to safe waste discarding, it is preferred that the majority of cyano groups shall be converted into a highly hydrophilic molecular structure portion.

The highly hydrophilic molecular structure portion may be exemplified by carbamoyl groups formed by hydrolysis of cyano groups.

The flocculant (hydrophilic groups such as carbamoyl group) is yielded by replacing at least a portion of the strongly hydrophobic cyan group inherently contained in the high-molecular material by a hydrophilic group, that is a carbamoyl group (CONH2) or by a carboxyl group (-COOH) or salts thereof (-COOX, where X is a cation).

This carbamoyl group or the carboxyl group is obtained by conversion of a functional group by a hydrolytic reaction. This conversion of the functional group occurs in the sequence of a cyan group - a carbamoyl group - a carboxyl group (or a salt thereof).

As a matter of course, it is necessary for the cyano group to be contained in the high-molecular material as a starting material for the high-molecular flocculant produced according to the present invention in a form allowing for substitution by a hydrophilic group. A high-molecular material containing acrylonitrile (CH₂=CH-CN) is preferred because the cyano group is linked as side chain of the polymer molecule.

The molecular structure portions yielded on addition of ammonia, hydroxylamine, ethylene diamine, primary alkyl amine and ethanolamine to the cyano group of the acrylonitrile monomer unit are collectively shown in Fig. 1, along with structures obtained on yielding of the imidazoline ring by the action of ethylene diamine, acid salts, quaternary ammonium salts yielded on hydrolysis.

The above-mentioned high-molecular material may also be copolymers with other monomeric units (copolymers) without being limited to acrylonitrile homopolymers. These other monomeric units may be enumerated by one or more selected from the group consisting of acrylic acid, methacrylic acid, acrylic acid ester, methacrylic acid esters, butadiene, isoprene, chloroprene, vinyl chloride, acrylic amide, methacrylic amide, vinyl acetate, styrene, α-methyl styrene, ethylene, propylene, fumaric anhydride, maleic anhydride, itaconic anhydride, N-vinyl pyrrolidone and vinyl pyridine. The side chain of the ester bond of the acrylic acid ester and methacrylic acid ester is preferably constituted by saturated or unsaturated hydrocarbons having 1 to 10 carbon atoms.

Among representative high-molecular materials, obtained on combining acrylonitrile with the above-mentioned other polymers, there are, for example, acrylic fibers, nitrile fibers, SAN resins (styrene- acrylonitrile resins), acrylonitrile- butadiene resins, acrylonitrile- butadiene- styrene resins, acrylonitrile- butadiene-acrylic resins, acrylonitrile- chlorinated polyethylene resin, nitrile rubber and acrylonitrile- butadiene rubber.

Meanwhile, if the above-mentioned high-molecular material is an acrylonitrile homopolymer, the content of the cyano groups is 100 mol%. However, if the high-molecular material is the acrylonitrile copolymer, the content of the cyano groups naturally is varied depending on the content of the acrylonitrile monomer unit. If the content of the cyano groups is changed, the upper limit of the number of mols of the carbamoyl group introduced later, the carboxylic group introduced in place of the carbamoyl group on or the salts thereof are changed.

That is, if the content of the cyano groups is inherently small, the high-molecular flocculant of the present invention cannot exhibit high hydrophilicity or flocculating properties.

That is, according to the present invention, it is preferred that the cyano groups be contained in the high-molecular material in an amount corresponding to not less than 15 mol% of the total monomer units, that is that the content of the acrylonitrile monomer units be not less than 15 mol%. This amount is preferably not less than 25 mol%.

Meanwhile, the high-molecular material has the weight average molecular weight (Mw) of approximately not less than 5000. If the molecular weight is lower than this limit value, the flocculating properties as the high-molecular flocculant tend to be lost.

The high-molecular material, as the starting material for the high-molecular flocculant produced according to the present invention, may, of course, be a newly prepared material, that is a so-called virgin material. However, from the viewpoint of effective utilization of natural resources and prevention of environmental destruction, it is particularly desirable to use a used-up waste material.

These waste materials may be exemplified by, for example, a casing, a cover or a vessel used in electric appliances, cars, stationery, measurement instruments, building materials or in cosmetics. The waste materials may be in the form of a mixture with other waste materials. Examples of these other waste materials include synthetic or natural fibers, such as polyester, nylon, polyurethane, polyamides, polyphenylene ether, polycarbonates, polyphenylene sulfide, polyethylene terephthalate, polybutylene terephthalate, silk, wool or cotton, occasionally containing a variety of additives, such as coloring agents, stabilizers, water retention agents, combustion retardants, plasticizers or fillers.

If the above-mentioned other waste materials are used in conjunction, the content of these other waste materials is preferably not more than 60 wt%. If the content exceeds 60 wt%, the effect of the functional groups is strongly demonstrated such that desired water, solubility is occasionally not imparted to the yielded high-molecular flocculant.

Thus, although the waste materials may be those recovered from factories, retail stores or homes, the waste materials from factories or retail stores, where waste materials of the unitary composition are likely to be produced in larger quantities, are more desirable than those recovered from holes and in which foreign waste materials tend to be mixed more readily.

If the high-molecutar flocculant has a molecular structure portion comprised of organic and/or inorganic amino compounds added to at least a portion of the cyano groups contained in the high-molecular material, it is sufficient if the above-mentioned acrylonitrile homopolymer or copolymer is used as a starting material and is reacted with the organic and/or inorganic amino compounds.

This reaction can be carried out by directly injecting the starting material into the amino compounds. After the end of the reaction, it is possible to pour a solvent in which the high-molecular flocculant is not soluble, such as acetone, into the reaction mixture in large quantities to re-precipitate the product.

Alternatively, the reaction can be carried out in an organic solvent, which may be a C5 to C20 aliphatic chain hydrocarbon and/or cyclic hydrocarbon, C1 to C4 halogenated hydrocarbons, dichlorobenzene, aromatic hydrocarbons, ethers, ketones, esters, or non-protonic polar solvents, such as dimethyl sulfoxide (DMSO), dimethyl formamide (DMF), tetrahydrofuran (THF) or dioxane. If the organic solvent is used, the reaction product may be obtained as an aqueous solution by adding water to the reaction system and distilling off the solvent after the end of the reaction.

During the reaction, sulfur-based catalysts, such as sulfur powders, thiourea or thioacetoamide, are preferably used.

Although there is no limitation to the concentration of the amino compound during the reaction, it is preferably not lower than approximately 10%. If this concentration is too low, the speed of the addition reaction tends to be lowered, or the reaction of addition tends to be retarded. There is also no upper limit to the above concentration. If the reaction of addition is carried out by injecting a small amount of the high-molecular material into ethylene diamine, the concentration of ethylene diamine is approximately 100%.

The reaction temperature for the reaction of addition differs with the type of the high-molecular material used as the starting material, type of the catalyst used, type of the solvent used for the reaction system and with whether or not the solvent is used. If the reaction temperature is 0 to 150°C, the reaction is allowed to proceed with practically acceptable speed and controllability. If the temperature is lower than this range, the reaction speed is lowered thus possibly lowering the production efficiency. Conversely, if the temperature is higher than the above range, the high-molecular material tends to be lowered in molecular weight to lower the efficiency as the flocculant. This temperature range is preferably 20 to 120°C and most preferably 40 to 80°C.

As for the reaction time duration, which depends on the type of the amino compound used, the reaction time of 30 minutes to 50 hours can give a target product with a practically acceptable yield. If the reaction time duration is shorter than this range, sufficient modification cannot be achieved. However, if once the chemical equilibrium is reached, prolongation of the reaction time has no meaning.

If, in the present invention, hydrolysis is to occur after the addition reaction of the amino compound, it can be carried out by acid hydrolysis employing an acid catalyst or alkali hydrolysis employing a basic catalyst.

As the acidic catalyst for acidic hydrolysis, inorganic acids, such as sulfuric acid, sulfuric anhydride, fuming sulfuric acid, chlorosulfonic acid, hydrochloric acid, nitric acid or phosphoric acid, may be used. These inorganic acids may be used in conjunction with inorganic peroxides, such as aqueous hydrogen peroxide, in order to promote the hydrolytic reaction.

As the basic catalyst for the alkaline hydrolysis, hydroxides, hydrogen carbonates, carbonates or acetates of Li, Na, K or NH₄ may be used.

In any type of the alkaline hydrolysis, the high-molecular material may be directly injected into inorganic acids, or into an aqueous alkaline solution of an inorganic base. Alternatively, the hydrolysis may be carried out using the same solvent as that used for the above-mentioned reaction of addition. The catalyst concentration, reaction temperature or the reaction time for hydrolysis may be set equivalently to the respective ranges discussed in connection with the above-mentioned reaction of addition.

The high-molecular flocculant, resulting from the above process, is of the nonionic type in the stage in which it has acquired the molecular structure portion directly after addition of the amino compound, and is of the strong cation type on converting this molecular structure portion into an acid salt or a quaternary ammonium salt. That is, with the above-described manufacturing method of the high-molecular flocculant, it is possible to produce flocculants of the nonionic type and the cationic type by judiciously selecting and combining the stages of the progress of the reaction of addition and the salt-forming reaction.

For converting the cyano group for introducing carbamoyl groups, carboxylic groups or salts thereof, the aforementioned acrylonitrile homopolymers or copolymers are used as the starting material, that is as a basic material for hydrolysis.

The hydrolysis is roughly classified into an acidic hydrolysis employing an acidic catalyst and hydrolysis employing the basic catalyst. Any of these hydrolysis types may be used in the present invention.

As the acidic catalyst for the above-mentioned acidic hydrolysis, inorganic acids, such as sulfuric acid, sulfuric anhydride, fuming sulfuric acid, chlorosulfonic acid, hydrochloric acid, nitric acid or phosphoric acid, may be used. These inorganic acids may be used in conjunction with inorganic peroxides, such as aqueous hydrogen peroxide, in order to promote the hydrolytic reaction. Since the acidic hydrolysis of the high-molecular material containing cyano groups is satisfactory in controllability, the reaction itself can be carried out in one step by properly selecting the reaction temperature and the reaction time so that a desired content of the carbamoyl groups will be achieved.

Although there is no particular limitation to the concentration of the inorganic acid, it is preferably set to approximately not less than 10%. If this concentration is too low, it may occur that the reaction speed of the hydrolysis is lowered or the hydrolytic reaction cannot proceed sufficiently. There is also no particular limitation to the upper limit of the concentration. If hydrolysis is carried out by charging a small quantity of the high-molecular material into sulfuric acid, the concentration of the inorganic acid is approximately 100%.

As the basic catalyst for the alkaline hydrolysis, inorganic bases, such as hydroxides, hydrogen carbonates, carbonates or acetates of Li, Na, K or NH₄ may be used.

However, alkaline hydrolysis is in need of a higher temperature than in the case of the acidic hydrolysis described above, such that, if this temperature condition is once achieved, the reaction proceeds speedily. The result is that the yielded high-molecular flocculant is lowered in molecular weight, or the reaction of conversion of the cyan group through a carbamoyl group to a carboxylic group or its salt proceeds at a time to render it difficult to control the introduced amount of ionic groups, that is carboxylic anions.

Therefore, the basic catalyst is not used from the outset of the reaction, and is preferably used in the second stage in case of the two-stage hydrolysis. That is, acidic hydrolysis by the acidic catalyst is first carried out in the first stage to prescribe substantially the amount of the carbamoyl groups introduced and alkaline hydrolysis is then carried out in the second stage in order to convert a further portion of the carbamoyl groups into carboxylic groups or salt thereof.

In any type of the alkaline hydrolysis, the high-molecular material may be directly injected into inorganic acids, or into an aqueous alkaline solution of an inorganic base.

Alternatively, the above hydrolysis may be carried out in an organic solvent, which may be a C5 to C20 aliphatic chain hydrocarbon and/or cyclic hydrocarbon, C1 to C4 halogenated hydrocarbons, aromatic hydrocarbons, ethers, ketones, esters, or non-protonic polar solvents, such as dimethyl sulfoxide, dimethyl formamide, tetrahydrofuran or dioxane.

The method for ultimate recovery of the high-molecular flocculant in the above-described manufacturing method differs with the system of the hydrolytic reaction. If, for example, the high-molecular material is directly charged into inorganic acid, it is possible to pour a solvent in which the high-molecular flocculant is not soluble, such as acetone, into the reaction mixture in large quantities to re-precipitate the product. If the solvent is used during hydrolysis, the reaction product may be obtained as an aqueous solution by neutralizing an excess acidic catalyst or a basic catalyst and by distilling off the solvent.

With the reaction temperature for hydrolysis ranging between 0 to 180°C, the reaction is allowed to proceed with practically satisfactory speed and controllability, although the reaction temperature differs with the types of the high-molecular material used as a starting material, the catalyst constituting the reaction system, and the presence or absence of the solvent. The reaction temperature is more preferably 20 to 150°C and most preferably 60 to 130°C.

The high-molecular flocculant, obtained as described above, is of the nonionic type by introducing the carbamoyl group and is of the anionic type by substituting carboxylic acid or carboxylates for a portion of the carbamoyl group.

Since the high-molecular flocculant produced according to the present invention is at any rate of the nonionic, cationic or anionic type, it may be used for water processing in accordance with the usual method of exploiting the nonionic, cationic or anionic type high-mplecular flocculant. Alternatively, the high-molecular flocculant produced according to the present invention may be used in conjunction with various other flocculants.

The usable nonionic high-molecular flocculants may be exemplified by a synthetic system, such as polyacrylic amide, polymethacrylic amide or polyoxyethylene, or natural systems, such as starch, guar gum, gelatine or the like sugar, or proteins.

The cationic high-molecular flocculants include quaternary products : of dialkyl aminoalkyl (meth)acrylate, where the quaternarification agents include methyl chloride, dimethyl sulfate and benzyl chloride, or acid salts thereof, where acid salts include inorganic acid salts, such as hydrochlorates or sulfates, and organic acid salts, such as acetates, polymers or copolymers thereof with (meth)acrylamide such as polymers of methyl chloride quaternary product of dimethyl aminoethyl acrylate or a copolymer thereof with acrylic amide. The cationic high-molecular flocculants also include quaternary product of dialkyl aminoalkyl (meth)acrylic amide or an acid salt thereof, and polymers or copolymers thereof with (meth)acrylic amide, such as copolymer of methyl chloride quaternary product of dimethyl amino propyl and acrylic amide. The cationic high-molecular flocculants also include cationated modified product of polyacrylamide , such as Mannich modified product and Hoffman decomposition product of polyacrylamide, and an epihadrin-amine condensates, such as a polycondensate of epihadrin and C2 to C6 alkylene diamine. The cationic high-molecular flocculants also include polydimethyl diallyl ammonium chloride, polyvinyl imidazoline and/or salts thereof, dicyan diamide condensates, such as a formalin condensate of dicyanamide and ammonium chloride. The cationic high-molecular flocculants also include polyethylene imine, its quaternary product or acid salts thereof polyvinyl imidazole, its quaternary product or acid salts thereof, poly-4- vinyl benzyl trimethyl ammonium chloride, chitosan and its salts. The cationic high-molecular flocculants also include acidic hydrolyzates of N-vinyl formamide/ acrylonitrile copolymer, its quaternary product or acid salts, polyvinyl pyridine and tis quaternary product or acid salts. The cationic high-molecular flocculants further include an alkylene dichloride and polyalkylene polyamine condensates, aniline- formaldehyde polycondensates, polyhexameythylene thiourea acetate, polyamino acids, such as polylysin, polyglutamic acid and its salts.

The anionic high-molecular flocculants include partial hydrolyzates of polyacrylic amide and polymethacrylic amide, copolymers of acrylic acid or methacrylic acid and acrylic amide or methacrylic amide and salts thereof. The anionic high-molecular flocculants also include acrylic acid or methacrylic, acid and acrylic amide or methacrylic amide and 2-acryl amide- methyl propane sulfonic acid or vinyl sulfonic acid ternary copolymer and salts thereof. The anionic high-molecular flocculants also include sodium salts of alginic acid, Guar gum, carboxymethyl cellulose and starch, polystyrene sulfonic acid and salts thereof. The anionic high-molecular flocculants further include sulfonated products and salts of polystyrene-based resin waste materials, such as polystyrene, high-impact polystyrene, ABS resin, SAN resin, nitrile rubber. The waste materials may contain up to 60 wt% of polyphenylene ether, polycarbonates, polyethylene terephthalates, polyamides and polyphenylene sulfide.

Of these high-molecular flocculants, sulfonated styrene-based polymers are desirable in that these exhibit high clarifying effect for a liquid suspension and can be fabricated using waste materials as the high-molecular flocculant produced according to the present invention.

Examples of the styrene-based polymers used for the high-molecular flocculants include styrene- butadiene, styrene-acrylonitrile, styrene- butadiene- acrylonitrile, styrene- (meth)acrylic acid, styrene- (meth)acrylate (aliphatic hydrocarbon having 1 to 4 carbon atoms), styrene- acrylonitrile- (meth)acrylate (aliphatic hydrocarbon having 1 to 4 carbon atoms), styrene- butadiene-(meth)acrylate (aliphatic hydrocarbon having 1 to 4 carbon atoms), styrene- maleic anhydride, styrene- acrylonitrile (meth)acrylate (aliphatic hydrocarbon having 1 to 4 carbon atoms), styrenebutadiene- acrylonitrile and styrene- maleic anhydride. Preferred are styrene- butadiene, styrene- acrylonitrile, styrene- butadiene-acrylonitrile, styrene- maleic anhydride, styrene- acrylonitrile-(meth)acrylic acid ester (aliphatic hydrocarbon having 1 to 4 carbon atoms) and styrene- butadiene- (meth)acrylate (aliphatic hydrocarbon having 1 to 4 carbon atoms). Most preferred are styrene- butadiene, styrene- acrylonitrile, styrene- butadiene- acrylonitrile, styrenemaleic anhydride.

The above-mentioned styrene-based polymers may be a newly prepared material, that is a so-called virgin material, for producing the high-molecular flocculant, waste materials from factories, retail stores or homes (waste materials) or the combination of the virgin material and the waste material. For re-exploitation of the polystyrene-based resin products, manufactured in large quantities as general-purpose resins, and for maintaining the earth's environments, it is more desirable to use the waste materials rather than the virgin materials, as the styrene-based polymers.

If the waste materials are used, polymers other than the above-mentioned styrene-based polymers may be contained in addition to the styrene-based polymers. These other polymers may be exemplified by polyphenylene ether, polycarbonates, polyphenylene sulfides and polyethylene terephthalates. Most preferred are polyphenylene ether and polycarbonates. The content of these other polymers is preferably not more than approximately 60 wt%.

### EXAMPLES

The present invention is hereinafter explained with reference to illustrative Examples based on experimental results.

### [Modification of Cyano-Group Containing High-Molecular Waste Materials by Addition of Amino Compounds and Hydrolysis]

First, the high-molecular waste material containing cyano groups is reacted with amino compounds to produce a high-molecular flocculant.

The following two high-molecular waste materials, containing cyano groups, we used in the following experiments.

### · Acrylic fiber waste material α

waste material of acrylic fibers for underwear containing not less than 95 mol% of acrylonitrile

### ·nitrile resin waste material b

waste material of vessels for cosmetics containing not less than 90 mol% of acrylonitrile

The above three waste materials were processed into small-sized chips for use as starting material The acrylic fiber waste material was severed by scissors into small-sized chips with each side 5 mm or less in length, while the nitrile resin waste material b and the SAN resin waste material c were severed by a cutter type crusher into small-sized chips not larger than 16 mesh for use as starting material.

### Reference Example 1

1.0 g of small pieces of nitrile resin waste material *b* was dissolved in 100 ml of dimethyl sulfoxide (DMSO). To the resulting mass were dripped 2.3 g of ethanolamine at room temperature. The resulting mass was stirred in situ and heated to 100°C to carry out the reaction for 12 hours.

After the end of the reaction, the reaction solution was poured into ethanol and precipitated. After filtration, the resulting product was rinsed with methanol and dried in vacuo at room temperature. The above processing yielded a polymer in which 85% of the cyano groups were replaced by an imino structure.

The resulting product was termed a high-molecular flocculant C. This high-molecular flocculant C was of the cationic type.

### Example 1

The high-molecular flocculant C of Reference Example 1 was dissolved in water and the resulting aqueous solution was heated at 90°C for 15 hours. After the end of the heating, the aqueous solution was dried to produce powders, for which the Fourier transform IR absorption spectrum (FT-IR) and nuclear magnetic resonance (NMR) spectrum were measured. By these measurements, it was confirmed that 70 mol% of the imino structure was hydrolysed and converted to an amide structure.

This high-molecular flocculant was termed a high-molecular flocculant F which was of the nonionic type.

### Example 2

0.05 g of sulfur powdered and 1.0 g of small pieces of waste acrylic fiber material *a* were added to 20 g of ethylene diamine and reaction was carried out at 110°C for six hours. After the end of the reaction, non-reacted ethylene diamine was distilled off by distillation in vacuo and the residual mass was dissolved in water and precipitated with acetone.

The precipitates were then filtered and dried in vacuo at room temperature to produce brown powders. For these powders, the Fourier transform IR absorption spectrum (FT-IR) and nuclear magnetic resonance (NMR) spectrum were measured. By these measurements, it was confirmed that 42 mol% of the cyano groups of the solid reaction product were converted to imidazoline rings, and 18 mol% thereof were converted to - amino ethyl acrylamide which was a hydrolizate.

This polymer was then dissolved in water and a dilute aqueous solution of hydrochloric acid was added to the solution to give an aqueous solution of a hydrochlorate polymer.

This high-molecular flocculant was termed a high-molecular flocculant G which was of the nonionic type.

### [Modification of Waste High-molecular Material by Hydrolysis of Cyano Groups]

The following four high-molecular materials were used as base materials for hydrolysis in the respective Examples.

### ·waste acrylic fibers d

waste acrylic fibers for underwear containing not less than 90 mol% of acrylonitrile;

### ·waste nitrile rubber e

waste oil-resistant rubber and hose material containing not less than 40 mol% of acrylonitrile;

### waste nitrile resin f

waste vessels for cosmetics containing not less than 90 mol% of acrylonitrile;

### ·SAN (styrene-acrylonitrile) waste resin g

waste battery casing material containing not less than 30 mol% of acrylonitrile;

The waste material d was severed with scissors into small pieces each having a side measuring 5 mm or less.

The waste material e was freeze-pulverized to small pieces each measuring 32 mesh or less.

The waste materials *f* and *g* were pulverised to small pieces measuring 32 mesh or less using a cutter type pulveriser.

### Example 3

0.6g of the waste material d was charged into 30 g of 96%-sulfuric acid and agitated in situ to carry out acidic hydrolysis at 50°C for two hours. The waste material d was completely dissolved in sulfuric acid.

Next, this mixture was poured in a large quantity of acetone to yield a white precipitate, which was further washed twice or thrice with acetone and dried.

The dried powders were analyzed by measurement with the Fourier transform IR absorption spectrum (FT-IR) and nuclear magnetic resonance (NMR) spectrum. By these measurements, it was confirmed that not less than 90 mol% of the cyano groups in the waste material *d* were converted to carbamoyl groups and that no carboxylic groups were generated under the above-mentioned reaction conditions. These powders were also readily soluble in water.

These powders were termed a high-molecular flocculant N. The ion type of this high-molecular flocculant N was the nonionic type.

### Example 4

The acid hydrolysis was carried out by the same method as in Example 3 except using the waste material e and setting the reaction temperature and reaction time to 80°C and 4 hours, respectively.

The FT-IR and NMR measurements, conducted on the resulting powders, revealed that not less than 90 mol% of the cyano groups in the waste material e were converted to carbamoyl groups and that no carboxylic groups were generated under the above-mentioned reaction conditions. These powders were also readily soluble in water.

These powders were termed a high-molecular flocculant O. The ion type of this high-molecular flocculant O was the nonionic type.

### Example 5

The acid hydrolysis was carried out by the same method as in Example 3 except using, the waste material *f* and setting the reaction temperature and reaction time to 80°C and 4 hours, respectively.

The FT-IR and NMR measurements, conducted on the resulting powders, revealed that not less than 90 mol% of the cyano groups in the waste material *f* were converted to carbamoyl groups and that no carboxylic groups were generated under the above-mentioned reaction conditions. These powders were also readily soluble in water.

These powders were termed a high-molecular flocculant P. The ion type of this high-molecular flocculant P was the nonionic type.

### Example 6

The acid hydrolysis was carried out by the same method as in Example 3 except using the waste material *g* and setting the reaction temperature and reaction time to 80°C and 4 hours, respectively.

The FT-IR and NMR measurements, conducted on the resulting powders, revealed that not less than 90 mol% of the cyano groups in the waste material *g* were converted to carbamoyl groups and that no carboxylic groups were generated under the above-mentioned reaction conditions. These powders were also readily soluble in water.

These powders were termed a high-molecular flocculant Q. The ion type of this high-molecular flocculant Q was the nonionic type.

### Example 7

1 g of the waste material *d* was charged into 40 g of' cyclohexane and, as the temperature of the reaction system was controlled to 25 to 30°C, 1.8 g of sulfuric anhydride was dripped over 30 minutes. After the end of dripping, agitation was continued for further 30 minutes. 30 g of water were added to the reaction system to carry out hydrolysis at 30° for one hour.

The reaction mixture was distilled in vacuo to remove cyclohexane and the residual liquid was adjusted to pH of 6 to produce a high-molecular aqueous solution. The FT-IR and NMR measurements, conducted on the resulting high-molecular aqueous solution, revealed that not less than 90 mol% of the cyano groups in the waste material *d* were converted to carbamoyl groups and that no carboxylic groups were generated under the above-mentioned reaction conditions. These powders were also readily soluble in water.

These powders were termed a high-molecular flocculant R. The ion type of this high-molecular flocculant R was the nonionic type.

### Example 8

To a 1%-aqueous solution of the high-molecular flocculant N, obtained in Example 3, sodium hydroxide (NaOH) equivalent to 50 mol% of carbamoyl groups of the high-molecular flocculant N was added to carry out alkaline hydrolysis at 80°C for one hour.

The FT-IR and NMR measurements, conducted on the resulting high-molecular aqueous solution, revealed that, of the carbamoyl groups of the high-molecular flocculant N, 90 mol% of the added amount of NaOH, corresponding to 45 mol% of the initial carbamoyl group content, were converted to sodium salt type carboxylic groups.

These powders were termed a high-molecular flocculant S. The ion type of this high-molecular flocculant S was the anionic type.

### Example 9

To a 1%-aqueous solution of the high-molecular flocculant R, obtained in Example 7, sodium hydroxide (NaOH) in an equimolar amount to carbamoyl groups of the high-molecular flocculant R was added to carry out alkaline hydrolysis at 80°C for one hour.

The FT-IR and NMR measurements, conducted on the resulting high-molecular aqueous solution, revealed that, of the carbamoyl groups of the high-molecular flocculant R, 90 mol% of the added amount of NaOH, corresponding to 90 mol% of the initial carbamoyl group content, were converted to sodium salt type carboxylic groups.

These powders were termed a high-molecular flocculant T. The ion type of this high-molecular flocculant T was the anionic type.

The high-molecular flocculants obtained in Examples 3 to 9 are indicated collectively in Table 1.

**TABLE 1**

| Ex | starting material and hydrolysis type (catalysts for hydrolysis are given in parentheses) | acrylonit rile content in starting material (mol%) | content of functional groups after modification (mol%) | state of products | appellation and ion type of high-molecular flocculant |
|---|---|---|---|---|---|
| 3 | waste acrylic fibers: d; acidic hydrolysis (concentrated sulfuric acid) | >90 | -CN <9 -CONH₂ >81 -COOH - | water-soluble, white powders | N: nonionic |
| 4 | waste nitrile rubber: e; acidic hydrolysis (concentrated sulfuric acid) | >40 - | -CN <4 -CONH₂ >36 -COOH - | water-soluble, white powders | O: nonionic |
| 5 | waste nitrile resin: f; acidic hydrolysis (concentrated sulfuric acid) | >90 | -CN <9 -CONH₂ >81 -COOH - | water-soluble, white powders | P: nonionic |
| 6 | waste styrene-acrylonitrile resin: g; acidic hydrolysis (concentrated sulfuric acid) | >30 | -CN <3 -CONH₂ >27 -COOH - | water-soluble, white powders | Q: nonionic |
| 7 | waste acrylic fibers: d; acidic hydrolysis (sulfuric anhydride) | >90 | -CN <9 -CONH₂ >81 -COOH - | high-molecular aqueous solution | R: nonionic |
| 8 | product N of Ex.8; acidic hydrolysis (concentrated sulfuric acid) + alkaline hydrolysis (NaOH) | >90 | -CN <9 -CONH₂ >45 -COOH >36 | high-molecular aqueous solution | S: anionic |
| 9 | product R of Ex.12; acidic hydrolysis (sulfuric anhydride) + alkaline hydrolysis (NaOH) | >90 | -CN <9 -CONH₂ >8 -COOH >73 | high-molecular aqueous solution | T: anionic |

In Table 1, the content of the as-modified functional groups refers to the total number of mols of the monomeric units making up the high-molecular material.

Although the preferred embodiments of the present invention have been explained in the foregoing, it should be noted that these embodiments have been given for illustration purposes and are not intended for limiting the scope of the invention. Specifically, the present invention can be optionally modified as to the types of the starting materials for the high-molecular flocculant or conditions for addition reaction, hydrolytic reaction, or acid salt formation.

## Claims

1. A method for producing a high-molecular flocculant comprising:
hydrolyzing a high-molecular weight polymeric material containing a cyano group to convert at least a portion of the cyano group into a carbamoyl group.

2. The method for producing a high-molecular flocculant as claimed in claim 1 wherein the hydrolysis is carried out in one step in the presence of an acidic catalyst

3. The method for producing a high-molecular flocculant as claimed in claim 1 wherein the hydrolysis is carried out in two steps, namely a first step employing an acidic catalyst and a second step of employing a basis catalyst, and wherein, in the second step, a further portion of the carbamoyl group is converted into a carboxylic group or salts thereof.

4. The method for producing high-molecular flocculant as claimed in claim 1 wherein a high-molecular weight polymeric material containing acrylonitrile as a monomer unit is used as the high-molecular material.

5. The method for producing high-molecular flocculant as claimed in claim 4 wherein at least one of an acrylic fibers, nitrile resin, styrene-acrylonitrile resin, acrylonitrile-butadiene-styrene resin, acrylonitrile-styrene-acrylic resin, acrylonitrile-chlorinated polyethylene-styrene resin, nitrile rubber and acrylonitrile-butadiene rubber is used as the high-molecular weight polymeric material.

6. The method for producing high-molecular flocculant as claimed in claim 1 wherein a high-molecular weight polymeric material containing not less that 15mol% of the total monomer units is used as the high-molecular weight material.

## Patentansprüche

1. Verfahren zur Herstellung eines hochmolekularen Flockungsmittels, umfassend:
Hydrolysieren eines Polymermaterials mit hohem Molekulargewicht, enthaltend eine Cyanogruppe, um mindestens einen Teil der Cyanogruppen in Carbamoylgruppen zu überführen.

2. Verfahren zur Herstellung eines hochmolekularen Flockungsmittels nach Anspruch 1, wobei die Hydrolyse in einem Schritt in Gegenwart eines Säurekatalysators durchgeführt wird.

3. Verfahren zur Herstellung eines hochmolekularen Flockungsmittels nach Anspruch 1, wobei die Hydrolyse in zwei Schritten durchgeführt wird, und zwar in einem ersten Schritt unter Verwendung eines Säurekatalysators und einem zweiten Schritt unter Verwendung eines Basenkatalysators, und wobei im zweiten Schritt ein weiterer Teil der Carbamoylgruppen in Carboxylgruppen oder Salze hiervon umgewandelt wird.

4. Verfahren zur Herstellung eines hochmolekularen Flockungsmittels nach Anspruch 1, wobei ein Polymermaterial mit hohem Molekulargewicht, enthaltend Acrylonitril als eine Monomereinheit, als das hochmolekulare Material verwendet wird.

5. Verfahren zur Herstellung eines hochmolekularen Flockungsmittels nach Anspruch 4, wobei mindestens eines von Acrylfasern, Nitrilharz, Sytrol-Acrylonitrilharz, Acrylonitril-Butadien-Styrol-Harz, Acrylonitril-Styrol-Acrylharz, Acrylonitril-chloriertes Polyethylen-Styrol-Harz, Nitrilgummi und Acrylonitril-Butadiengummi als das Polymermaterial mit hohem Molekulargewicht verwendet wird.

6. Verfahren zur Herstellung eines hochmolekularen Flockungsmittels nach Anspruch 1, wobei ein Polymermaterial mit hohem Molekulargewicht, enthaltend nicht weniger als 15 Mol-% der Gesamtmonomereinheiten, als das Material mit hohem Molekulargewicht verwendet wird.

## Revendications

1. Procédé de production d'un floculant de masse moléculaire élevée comprenant les étapes consistant à :
hydrolyser un matériau polymère de masse moléculaire élevée contenant un groupe cyano pour convertir au moins une partie du groupe cyano en groupe carbamoyle.

2. Procédé de production d'un floculant de masse moléculaire élevée selon la revendication 1 dans lequel l'hydrolyse est effectuée en une étape en présence d'un catalyseur acide.

3. Procédé de production d'un floculant de masse moléculaire élevée selon la revendication 1 dans lequel l'hydrolyse est effectuée en deux étapes, à savoir une première étape utilisant un catalyseur acide et une seconde étape d'utilisation d'un catalyseur basique, et dans lequel, dans la seconde étape, une partie supplémentaire du groupe carbamoyle est convertie en un groupe carboxylique ou des sels de celui-ci.

4. Procédé de production d'un floculant de masse moléculaire élevée selon la revendication 1 dans lequel un matériau polymère de masse moléculaire élevée contenant l'acrylonitrile en tant que motif monomère est utilisé en tant que matériau de masse moléculaire élevée.

5. Procédé de production d'un floculant de masse moléculaire élevée selon la revendication 4 dans lequel au moins un parmi des fibres acryliques, une résine nitrile, une résine styrène-acrylonitrile, une résine acrylonitrile-butadiène-styrène, une résine acrylonitrile-styrène-acrylique, une résine acrylonitrile-polyéthylène chloré-styrène, un caoutchouc nitrile et un caoutchouc acrylonitrile-butadiène est utilisé en tant que matériau polymère de masse moléculaire élevée.

6. Procédé de production d'un floculant de masse moléculaire élevée selon la revendication 1 dans lequel un matériau polymère de masse moléculaire élevée contenant pas moins de 15 % en moles des motifs monomères totaux est utilisé en tant que matériau de masse moléculaire élevée.
